Europäisches Patentamt

European Patent Office

Office européen des brevets

(11) Publication number: **0 152 911**
**B1**

(12) **EUROPEAN PATENT SPECIFICATION**

(45) Date of publication of patent specification: **14.12.88**

(51) Int. Cl.⁴: **H 01 B 3/44,** H 01 B 3/28 // C08L23/08

(21) Application number: **85101574.3**

(22) Date of filing: **13.02.85**

(54) Insulated electric cable.

(30) Priority: **15.02.84 JP 27779/84**
**17.02.84 JP 29416/84**

(43) Date of publication of application:
**28.08.85 Bulletin 85/35**

(45) Publication of the grant of the patent:
**14.12.88 Bulletin 88/50**

(84) Designated Contracting States:
**BE CH DE FR GB IT LI NL SE**

(56) References cited:
**EP-A-0 099 640**
**EP-A-0 100 247**
**DE-A-2 711 260**

**PATENT ABSTRACTS OF JAPAN, unexamined applications, E section, vol. 2, no. 147, December 8, 1978, THE PATENT OFFICE JAPANESE GOVERNMENT, p. 9301 E 78**

**The file contains technical information submitted after the application was filed and not included in this specification**

(73) Proprietor: **SUMITOMO ELECTRIC INDUSTRIES LIMITED**
**No. 15, Kitahama 5-chome Higashi-ku Osaka-shi Osaka 541 (JP)**

(72) Inventor: **Matsubara, Hironaga c/o Osaka Works of Sumitomo**
**Electric Ind. Ltd. No. 1-3, Shimaya 1-chome Konohana-ku Osaka (JP)**
Inventor: **Yamanouchi, Shosuke c/o Osaka Works of Sumitomo**
**Electric Ind. Ltd. No. 1-3, Shimaya 1-chome Konohana-ku Osaka (JP)**
Inventor: **Inoue, Yoshiyuki c/o Osaka Works of Sumitomo**
**Electric Ind. Ltd. No. 1-3, Shimaya 1-chome Konohana-ku Osaka (JP)**
Inventor: **Hosoe, Katsuhiro c/o Osaka Works of Sumitomo**
**Electric Ind. Ltd. No. 1-3, Shimaya 1-chome Konohana-ku Osaka (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath Maximilianstrasse 58**
**D-8000 München 22 (DE)**

Courier Press, Leamington Spa, England.

# EP 0 152 911 B1

**Description**

The present invention relates to an insulated electrical cable using as an insulator a composition of an ethylene-vinyl acetate copolymer containing 5 to 35% by weight of vinyl acetate and of a further component, which has a long-term stability or high resistance to deterioration of the solution.

Oil-filled cables, cross-linked polyethylene cables, and polyethylene cables are currently used in power transmission and distribution, as well as in power supply to electric machines such as electric precipitators and ion generators. Oil-filled cables exhibit stable characteristics but they often cause oil leakage if not handled with utmost care. Cross-linked polyethylene cables and ordinary polyethylene cables permit easy maintenance and handling, so they are used extensively today, with their voltage levels increasing year by year. The biggest problem with these conventional types electric cables is that they are gradually deteriorated by continued voltage application and breakdown of insulation is caused within a fairly short period of actual service.

This is also valid for the insulator compositions known from EP—A—0 099 640, DE—A—2 711 260 and from "Patent Abstracts of Japan", Section E, Vol. 2, No. 147, 8. December 1971, page 9 301 E 78.

The insulator composition described in EP—A—0 099 640 consisting of an ethylene-vinyl acetate copolymer and of polyethylene has an insufficient break down time of insulation as well as the composition of an ethylene-propylene-diene ternary polymer and of an ethylene-vinyl acetate copolymer having a density of less than 0,91 known from DE—A—2 711 260 (in this regard see the Comparative Examples 5 and 7 following below). Also the magnetic wire having an insulating layer comprising a composition of an ethylene propylene rubber and an ethylene acetate-vinyl acopolymer said EP-rubber having a density of 0.91 or less, as disclosed in the above cited literature "Patent Abstracts of Japan" does not provide the necessary high resistance to deterioration of insulation as can be seen from Comparative Example 11 in Table 3 following below.

Object of the present invention is to find an insulated electrical cable which has an excellent long-term stability and a higher resistance to deterioration of the insulation than the known insulated electrical cables.

While numerous studies have been made on the mechanism of deteriorated insulation, no one has ever succeeded in proposing a clear picture for this phenomenon. As a result of various studies made to fill this gap, the present inventors have found an insulated electrical cable having an excellent long-term stability and capable of suppressing the deterioration of insulation.

Summary of the invention

The subject matter of the present invention is an insulated electrical cable using as an insulator a composition of an ethylene-vinyl acetate copolymer containing 5 to 35% by weight of vinyl acetate, and of a further component which is characterized in that said further component is an ethylene-olefin copolymer having a density of 0.91 or more.

The insulated electrical cable of the present invention has an excellent long-term stability is capable of suppressing the undesired deterioration of insulation, i.e. it provides a higher resistance to deterioration of insulation than the insulator compositions of the prior art.

The present invention also relates to an insulated electric cable using as an insulator a cross-linked composition of an ethylene-vinyl acetate copolymer and of a further component, said composition containing from 1 to 10% by weight of vinyl acetate, characterized in that said further component is an ethylene-α-olefin copolymer having a density of 0.91 or more.

According to a preferred embodiment of the present invention the uncross-linked composition contains 5 to 30% by weight of the ethylene-vinyl acetate copolymer.

According to another preferred embodiment of the present invention the cross-linked composition contains as the α-olefin in the ethylene-α-olefin copolymer an α-olefin having not more than 8 carbon atoms, that copolymer having a value of more than 3 in terms of the ratio of the weight average molecular weight to the number average molecular weight.

Detailed description of the invention

The insulated electrical cable of the present invention which has an insulator made of an ethylene-α-olefin copolymer and an ethylene-vinyl acetate copolymer (EVA) has an extended life upon cyclic application of damped oscillating voltage (see the experimental data shown below in this specification).

If the insulated cable of the present invention has an uncross-linked insulator, it preferably contains 5—30 wt% of the ethylene-vinyl acetate copolymer, this ethylene-vinyl acetate copolymer having a vinyl acetate content of 5—35 wt%.

If the insulated cable of the present invention has a cross-linked insulator, the ethylene-α-olefin copolymer preferably contains an α-olefin having 8 carbon atoms or less. If the α-olefin has more than 8 carbon atoms, only a marginal improvement in the ability to suppress deterioration of the insulation is obtained although the exact reason for this is not clear.

The ethylene-α-olefin copolymer should have a density of 0.91 or more in order to avoid the decrease in the voltage that causes initial breakdown at low voltage.

The ethylene-α-olefin copolymer preferably has a value of not less than 3 in terms of the ratio of the

2

weight average molecular weight to the number average molecular weight. If this ratio is less than 3, the chance of initial breakdown at low voltage is increased, particularly in case of long cables. If the insulator contains less than 1% of vinyl acetate, the desired ability to suppress deteriorated insulation is not obtained. If the vinyl acetate content exceeds 10%, the value of dissipation factor (tanδ) is increased.

The advantages of the present invention are hereunder shown by reference to working examples.

Experiment 1:
Examples 1 to 3 and Comparative Examples 1 to 4

Single copper conductors (1 mmφ) were covered successively with an inner semiconductive layer (0.8 mm thick) an insulating layer (1 mm thick; for the respective components, see Table 1 below) and an outer semiconductive layer (0.8 mm thick). Each layer was formed by extrusion. The insulating layer used in Comparative Example 1 was cross-linked by heating in a nitrogen atmosphere (5 kp/cm$^2$) at 200°C for 2 minutes.

Each of the cable samples prepared was given cyclic application of a damped oscillating voltage (maximum peak value: 50 kV, oscillating frequency: 5 MHz, time constant: 10 μs) until breakdown of the insulation occurred. The number of the cycles of voltage application that each sample could withstand before its breakdown is indicated in Table 1 in terms of a relative value, with the value for the sample in Comparative Example 1 taken as 1.

TABLE 1

| Insulator composition | Semicon-ductive layer | Comp. Ex. 1 | Comp. Ex. 2 | Ex. 1 | Ex. 2 | Ex. 3 | Comp. Ex. 3 | Comp. Ex. 4 |
|---|---|---|---|---|---|---|---|---|
| NUC 4201®$^{+1)}$ | 15% Vinyl acetate, 60 parts by weight of EVA (M.I. 15) and Denka Black | 100 | | | | | | |
| Ethylene-butene copolymer (density: 0.92, M.I.=1.5) | | | | 90 | 80 | | | 60 |
| Ethylene-4-methylpentene-1 copolymer (density: 0.92, M.I.=2.5) | | | | | | 70 | 70 | |
| NUC 9025®$^{+2)}$ | | | 90 | | | | | |
| EVA (5% VA) | | | 10 | 10 | | | | |
| EVA (20% VA) | | | | | 20 | 30 | | 40 |
| EVA (45% VA) | | | | | | | 30 | |
| Number of voltage applications before breakdown | | 1 | 1.1 | 1.0 | 2.1 | 2.5 | 1.0 | 1.0 |

$^{*1}$: Composition made of polyethylene (density: 0.92, M.I.=3) and cross-linking agent (Dicumylperoxide)
$^{2*}$: Polyethylene (density: 0.92, M.I.=3)

Experiment 2:
Examples 4 to 7 and Comparative Examples 5 to 7

Samples of electrically insulated cable were prepared by covering single copper conductors (5.5 mm$^2$) successively with an inner semiconductive layer (0.8 mm thick) and an insulating layer (1.5 mm thick; for the respective components, see Table 2 below). Each was formed by extrusion.

The samples were submerged in hot water (60°C) where a 10 kV AC voltage was applied thereto. The number of bow-tie-trees that formed in the insulator was counted both at 100 hours and at 200 hours. The results are shown in Table 2.

# EP 0 152 911 B1

TABLE 2

| Insulator composition | | Comp. Ex. 5 | Comp. Ex. 6 | Comp. Ex. 7 | Ex. 4 | Ex. 5 | Ex. 6 | Ex. 7 |
|---|---|---|---|---|---|---|---|---|
| Polyethylene*1) | | 100 | 80 | | | | | |
| Ethylene-butene-1 copolymer*2) | | | | 100 | 95 | 90 | 85 | 80 |
| EVA*3) | | | 20 | | 5 | 10 | 15 | 20 |
| Cross-linking agent*4) | | 1.6 | 1.6 | | | | | |
| Antioxidant*5) | | 0.16 | 0.16 | 0.16 | 0.16 | 0.16 | 0.16 | 0.16 |
| Number of bow-tie-trees per cm³ | at 100 h | >500 | 10 | >100 | 0 | 0 | 0 | 0 |
| | at 200 h | >500 | 20 | >200 | 5 | 1 | 0 | 0 |

*1: Density: 0.92, M.I.=1.3    *2: Ethylene content: 94    *3: Evatate K 4010®, VA content: 25%

*4: Dicumylperoxide    *5: SWC (Sand White Crystal)

Experiment 3:

Examples 9 to 11 and Comparative Examples 8 to 10

Samples of electrically insulated cable were prepared by covering single copper conductors (1 mm^φ) successively with an inner semiconductive layer (0.8 mm thick) and an insulator layer (1.5 mm thickness; for the respective components, see Table 3 below). Each layer was formed by extrusion. Thereafter, the samples were heated in a nitrogen atmosphere (5 kp/cm²) by heating at 200°C for 2 min so as to cross-link the insulator. The tan δ of each sample was measured. The samples were submerged in hot water (60°C) where a 20 kV AC voltage was applied to each sample until its insulation break down. Time during which each sample could withstand before its breakdown is indicated in Table 3 in terms of a relative value, with the value for the sample in Comparative Example 8 taken as 1.

TABLE 3

| Insulator composition | Comp. Ex. 8 | Comp. Ex. 9 | Ex. 9 | Ex. 10 | Ex. 11 | Comp. Ex. 10 |
|---|---|---|---|---|---|---|
| Polyethylene*1 | 90 | | | | | |
| Ethylene-butene-1 copolymer*2 | | 100 | 90 | 70 | | |
| Ethylene-4-methylpentene-1 copolymer*3 | | | | | 70 | |
| Ethylene-propene copolymer*4 | | | | | | 70 |
| EVA (1)*5 | 10 | | 10 | 30 | 30 | 30 |
| Cross-linking agent*6 | 1.2 | 1.2 | 1.2 | 1.2 | 1.2 | 1.2 |
| VA content (%) in insulator | 1.5 | 0 | 1.5 | 4.5 | 4.5 | 4.5 |
| Breakdow time (ratio to Com. Ex. 8) | 1 | 1.0 | 2.0 | 2.2 | 2.2 | 1.5 |
| Tan δ*7 | good | good | good | good | good | good |

*1: Density: 0.92, M.I.=1.3
*2: Density: 0.92, M.I.=2
*3: Density: 0.92, M.I.=2.5
*4: Density: 0.87, M.I.=10
*5: VA content: 15%, M.I.=0.3
*6: 2,5-dimethyl-2,5-di(tertiarybutylperoxy)hexyne-3
*7 ≥0.1% (good), <0.1% (poor)

4

# EP 0 152 911 B1

**Claims**

1. An insulated electrical cable using as an insulator a composition of an ethylene-vinyl acetate copolymer containing 5 to 35% by weight of vinyl acetate, and of a further component, characterized in that said further component is an ethylene-α-olefin copolymer having a density of 0.91 or more.

2. The cable according to Claim 1, characterized in that said composition contains 5 to 30% by weight of the ethylene-vinyl acetate copolymer.

3. An insulated electrical cable using as an insulator a cross-linked composition of an ethylene-vinyl acetate copolymer, and of a further component, said composition containing from 1 to 10% by weight of vinyl acetate characterized in that said further component is an ethylene-α-olefin copolymer having a density of 0.91 or more.

4. The cable according to Claim 3, characterized in that the α-olefin in the ethylene-α-olefin copolymer has not more than 8 carbon atoms, said copolymer having a value of more than 3 in terms of the ratio of the weight average molecular weight to the number average molecular weight.

**Patentansprüche**

1. Isoliertes elektrisches Kabel unter Verwendung einer Zusammensetzung aus einem Ethylen-Vinylacetat-Copolymer, enthaltend 5 bis 35 Gew.-% Vinylacetate, und aus einer weiteren Komponente als Isolator, dadurch gekennzeichnet, daß die weitere Komponente ein Ethylen-α-Olefin-Copolymer mit einer Dichte von 0,91 oder mehr ist.

2. Kabel nach Anspruch 1, dadurch gekennzeichnet, daß die Zusammensetzung 5 bis 30 Gew.-% des Ethylen-Vinylacetat-Copolymers enthält.

3. Isoliertes elektrisches Kabel unter Verwendung einer vernetzten Zusammensetzung aus einem Ethylen-Vinylacetat-Copolymer und aus einer weiteren Komponente als Isolator wobei die Zusammensetzung 1 bis 10 Gew.-% Vinylacetat enthalt, dadurch gekennzeichnet, daß die weitere Komponente ein Ethylen-α-Olefin-Copolymer mit einer Dichte von 0,91 oder mehr ist.

4. Kabel nach Anspruch 3, dadurch gekennzeichnet, daß das α-Olefin in dem Ethylen-α-Olefin-Copolymer nicht mehr als 8 Kohlenstoffatome besitzt, wobei das Copolymer einen Wert von mehr als 3 bezüglich des Verhältnisses des gewichtsdurchschnittlichen Molekulargewichts zu dem zahlendurchschnittlichen Molekulargewicht besitzt.

**Revendications**

1. Un câble électrique isolé dans lequel l'isolateur consiste en une composition d'un copolymère éthylène-acétate de vinyle contenant 5 à 35% en poids d'acétate de vinyle, et d'un autre comosant, caractérisé en ce que cet autre composant est un copolymère éthylène-α-oléfine ayant une densité de 0,91 ou plus.

2. Le câble selon la revendication 1 caractérisé en ce que la dite composition contient de 5 à 30% en poids du copolymère éthylène-acétate de vinyle.

3. Un câble électrique isolé dans lequel l'isolant consiste en une composition réticulée d'un copolymère éthylène-acétate de vinyle, et d'un autre composant, cette composition contenant de 1 à 10% en poids d'acétate de vinyle, caractérisé en ce que cet autre composant est un copoolymère éthylène-α-oléfine ayant une densité de 0,91 ou plus.

4. Le câble selon la revendication 3, caractérisé en ce que l'α-oléfine du copolymère éthylène-α-oléfine ne contient pas plus de 8 atomes de carbone et le rapport entre le poids moléculaire moyen, moyenne en poids, et le poids moléculaire moyen, moyenne en nombre, de ce copolymère est supérieur à 3.